# EUROPEAN PATENT APPLICATION

(11) **EP 4 383 910 A1**
(43) Date of publication of application: **12.06.2024**
(21) Application number: 22853577.9
(22) Date of filing: 08.08.2022
(51) Int. Cl.: H04W 72/12, H04L 5/00

(54) **METHOD AND DEVICE FOR TRANSMITTING AND RECEIVING SIGNAL IN WIRELESS COMMUNICATION SYSTEM**

(30) Priority: 06.08.2021 KR 20210103961
(71) Applicant: LG Electronics Inc., Yeongdeungpo-gu Seoul 07336 (KR)
(72) Inventor: BAE, Duckhyun, Seoul 06772 (KR); KIM, Jaehyung, Seoul 06772 (KR); HWANG, Seunggye, Seoul 06772 (KR)
(74) Representative: Mooser, Sebastian Thomas
(86) International application number: PCT/KR2022/011754
(87) International publication number: WO 2023/014202

(57) **Abstract**

A method and device for transmitting and receiving a signal in a wireless communication system, disclosed in the present specification, distinguish a first purpose radio resource configured as a dedicated resource for one terminal, and a second purpose radio resource commonly configured for terminals in a serving cell. A terminal uses the first purpose radio resource first. Thereby, resource allocation for the plurality of terminals can be flexibly performed while preventing latency due to data jitter.

## Description

### TECHNICAL FIELD

The present disclosure relates to a method and apparatus for use in a wireless communication system.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving data signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

According to an aspect of the present disclosure, a method of transmitting and receiving a signal by a user equipment (UE) in a wireless communication system includes configuring a first radio resource set and a second radio resource set, the first radio resource set including one or more first resource within one period, and the second radio resource set including one or more second resources within the one period, and transmitting or receiving the signal, the signal being transmitted or received through one of the first resources or one of the second resources, wherein, based on transmission or reception of the signal being performed through one of the first resource within the period, the second resource within the period is not used in transmission or reception of the signal, based on that performing of transmission or reception of the signal through the first resources within the period is skipped, one of the second resources within the period is used in transmission or reception of the signal, and the first radio resource set is a dedicated resource for the UE, and the second radio resource set is a common resource for a serving cell of the UE.

According to another aspect of the present disclosure, a method of transmitting and receiving a signal by a base station (BS) in a wireless communication system includes configuring a first radio resource set and a second radio resource set, the first radio resource set including one or more first resource within one period, and the second radio resource set including one or more second resources within the one period, and transmitting or receiving the signal, the signal being transmitted or received through one of the first resources or one of the second resources, wherein, based on transmission or reception of the signal being performed through one of the first resource within the period, the second resource within the period is not used in transmission or reception of the signal, based on that performing of transmission or reception of the signal through the first resources within the period is skipped, one of the second resources within the period is used in transmission or reception of the signal, and the first radio resource set is a dedicated resource for a specific user equipment (UE), and the second radio resource set is a common resource for a serving cell within the BS.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when data signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### DESCRIPTION OF DRAWINGS

FIG. 1 illustrates a radio frame structure.
FIG. 2 illustrates a resource grid during the duration of a slot.
FIG. 3 illustrates a self-contained slot structure.
FIGS. 4 to 6 are diagrams illustrating methods for transmitting and receiving a signal according to the embodiments of the present disclosure.
FIGS. 7 to 10 illustrate devices according to an embodiment of the present disclosure.

### MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

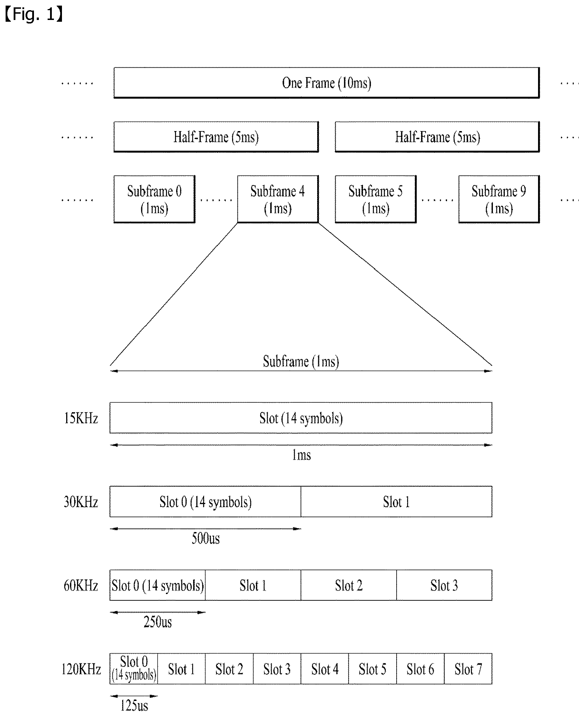

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frme,u}ₛₗₒₜ: number of slots in a frame * N^{subframe,u}ₛₗₒₜ: number of slots in a sub frame | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

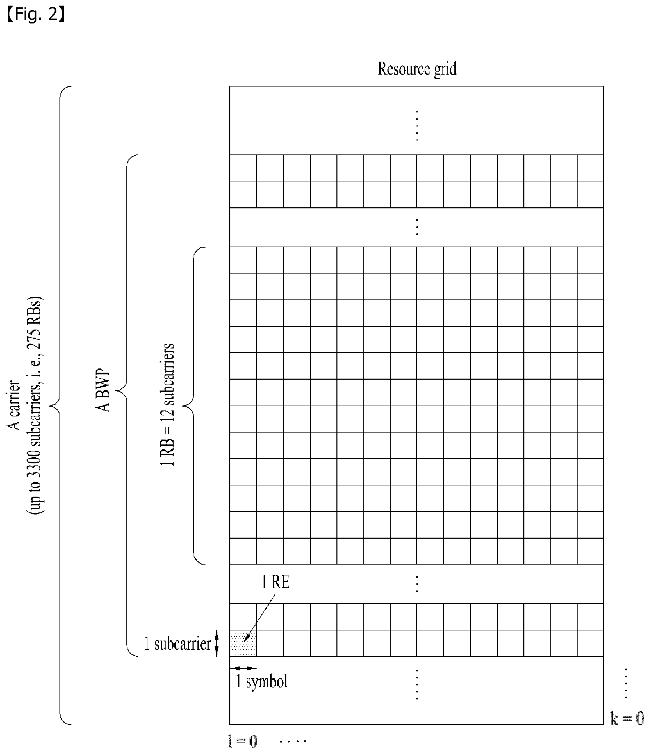

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

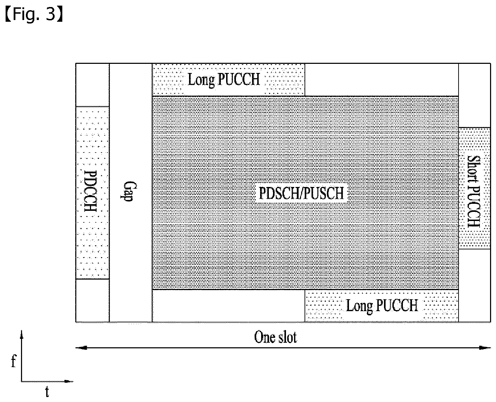

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### 1. Occurrence of Data Jitter

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

The NR system supports various numerologies (or SCSs) to provide various 5G services. For example, the NR system may support a wide area in conventional cellular bands with an SCS of 15 kHz and support a dense urban area and a wide carrier bandwidth with lower latency with an SCS of 30/60 kHz. For an SCS above 60 kHz, NR may support a bandwidth of 24.25 GHz or higher. According to Release 16, NR frequency bands are divided into two frequency ranges (FR1 and FR2), which may be configured as shown in Table 3. In addition, discussions are ongoing to support future NR systems operating above frequency bands defined in FR1/FR2 (for example, 52.6 GHz to 71 GHz).

Frequency bands above FR1 and FR2 (e.g., bands from 52.6 GHz to 114.25 GHz, and more particularly, bands from 52.6 GHz to 71 GHz) may be referred to as FR2-2. The waveforms, SCSs, CP lengths, timings, etc. defined for FR1 and FR2 in the current NR system may not be applied to FR2-2.

Hereinafter, methods for reducing power consumption and increasing the efficiency of radio resources while guaranteeing the availability and reliability of transmission resources when video information for extended reality (XR) services is transmitted on preconfigured resources such as SPS/CG of the NR wireless communication system will be described. Herein, SPS/CG may be interpreted as SPS and/or CG.

XR refers to ultra-realistic technologies and services that provide users with an environment in which the users are capable of communicating and living without time and space restrictions in a virtual space similar to reality, based on virtual reality (VR), augmented reality (AR), mixed reality (MR), holograms, etc. XR is one of the major services to be introduced in the NR wireless communication system. Typically, XR has specific traffic with one or more DL video streams closely synchronized with frequent UL pose/control updates. In addition, XR has a high data rate and a tight packet delay budget (PDB).

In the NR system, the UE may be configured with one or more SPS PDSCHs and/or CG PUSCHs for periodic transmission and reception, low latency, and/or low PDCCH overhead. Each SPS/CG configuration may include repeated resources configured and/or indicated with a periodicity. That is, resources configured and/or indicated by each SPS/CG configuration may be repeated with a specific periodicity, and the UE may perform DL reception and/or UL transmission on the corresponding resources without a separate PDCCH reception process.

There are various types of XR data. Among the various types of data, sensor information, location information, and/or video data of the UE, which are generally reported with a specific periodicity, may be transmitted and received on SPS and/or CG resources. The data generation time (or traffic arrival time) of data generated for XR is not constant due to the following reasons: video encoding time, sensor measurement time, higher layer operation, and/or network routing change. The non-constant data generation may be referred to as jitter.

When a resource is allocated to a location sufficiently distant in time from the expected traffic arrival time in consideration of jitter, the availability of the resource may be guaranteed, but there may be a time delay. On the other hand, when an SPS/CG resource with a fixed periodicity is allocated to the expected traffic arrival time, if jitter occurs, there may be a larger time delay due to a waiting time until a next available resource.

Considering that some data are generated based on events, it may be difficult to accurately determine a time at which the data are generated. To reduce a time delay caused by scheduling of data whose occurrence time is unknown, it may be considered to use SPS/CG resources. That is, it is discussed that when sufficient resources are allocated with a short periodicity in preparation for data generation, the UE or BS is allowed to selectively use some of the allocated resources without using the rest.

However, in order to skip transmission and reception, it is necessary to carefully consider response signals for determining the reception and transmission between the UE and BS. If the UE transmits a response signal for transmission that the UE has not received, the BS needs to prepare resources for the UE to transmit the response signal. According to this skipping method, since a sufficiently large number of radio resources need to be configured, preparation for response signals may be heavy loads in terms of UL. In addition, considering that resources may be multiplexed between UEs, the burden of UL resources needs to be considered more carefully.

Since low latency is essential for the quality of XR services, it is necessary to consider a method of minimizing the effect of latency while reducing the effect of jitter. To address this issue, some of multiple SPS/CG resources configured between the UE and BS may be selectively used.

Hereinafter, proposed methods will be described based on DL SPS resources and UL CG resources, which are semi-statically configured, but the proposed methods are not limited thereto. The proposed methods may also be extended and applied to radio resources allocated by dynamic scheduling to be received by the UE.

For example, a method for the UE to determine one HARQ-ACK timing for a plurality of DL radio resources allocated to the UE may be used regardless of an SPS PDSCH and a PDSCH indicated by dynamic scheduling. In addition, when a plurality of radio resources are not configured semi-statically but configured by dynamic indication, for example, when the plurality of radio resources are configured at once by DCI, the methods proposed in the present disclosure may be applied. Accordingly, unless stated otherwise, the methods proposed in this specification may be applied to all types of transmission/reception schemes expected by the BS and UE as long as the principles of the present disclosure are not infringed. In the present disclosure, the term SPS is used as a general concept for referring to semi-statically configured radio resources (e.g., DL/UL SPS, CG, etc.) for convenience of description.

In the present disclosure, a transmission occasion (TO) means a radio resource configured for SPS/CG (e.g., SPS PDSCH or CG PUSCH). An entity performing transmission (i.e., the BS in the case of DL or the UE in the case of UL) on the TO may attempt transmission on each TO, and a receiver (i.e., the UE in the case of DL or the BS in the case of UL) may expect transmission and attempt reception on each TO.

In the present disclosure, the NR system is described as an example to explain the principles of the present disclosure, but the proposed methods are not specifically limited to NR transmission/reception unless otherwise specified. In addition, the features and structures of XR services are described as examples to explain the principles of the present disclosure, but the proposed methods do not specifically limit the support of the XR services unless otherwise stated. Therefore, it is obvious that even if there is no explanation, the methods proposed in the present disclosure are applicable to all wireless communication transmission/reception structures and services as long as the principles of the disclosure are not infringed.

The present disclosure describes methods of classifying a plurality of SPS/CG resources configured between the UE and BS by purpose and selectively using some of the SPS/CG resources in preparation for the occurrence of jitter.

To this end, the proposed methods may include a method for the BS to allocate SPS/CG radio resources to the UE and a method of receiving and transmitting the SPS/CG resources. The proposed methods may include a method of transmitting a HARQ-ACK PUCCH response in response to reception of an SPS PDSCH and a method of receiving DCI retransmitted from the BS over a PDCCH after transmission of a CG PUSCH. In addition, the proposed methods may also include a process in which the UE transmits a signal and channel to inform its capabilities and/or service requirements and the BS receives the signal and channel.

According to the methods proposed in the present disclosure, some of the following methods may be selected and applied. Each method may be applied independently without any combination, or one or more of the methods may be applied in combination. Some of the terms, symbols, and orders used herein to describe the present disclosure may be replaced with other terms, symbols, and orders as long as the principles of the present disclosure are maintained.

### 1.1. Multiple segments of the group of transmission occasion for shared resources.

As described above, sufficient resources are allocated to one UE in consideration of data jitter. The UE may selectively use some of the allocated resources according to an arrival time of user data.

Only some of the allocated resources are utilized in the UE, and thus resources that are not selected by the UE may be wasted. To resolve this problem, it may be considered that a plurality of UEs share resources.

For example, when a plurality of SPS/CG configurations are configured in one UE, some SPS/CG configurations may be dedicated resources (a first use radio resource) to be used when significant jitter does not occur, and other SPS/CG configurations may be configured as resources (second use radio resources) to be shared with other UEs.

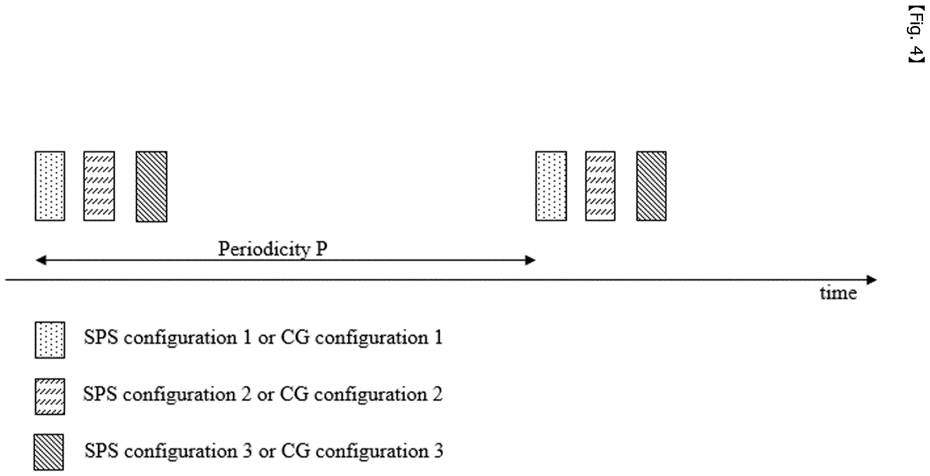

Referring to FIG. 4, three SPS/CG configurations having a period P may be configured in the UE. One of the three SPS/CG configurations is a dedicated resource, and the remaining two SPS/CG configurations may be resources to be shared with other UEs. A resource to be shared with another UE is a resource to be used by a plurality of UEs in one serving cell, and thus may be referred to as a common resource. Although three SPS/CG configurations are illustrated in FIG. 4, the number of SPS/CG configurations may be N. The SPS/CG configuration configured as a dedicated resource may be one or more. An SPS/CG configuration configured as a common resource may also be one or more.

A distinction between the first use radio resource and the second use radio resource may be performed by L1 (physical layer) signaling and/or higher layer signaling of a BS. In more detail, an RRC parameter indicating the use of resources may be included in each SPS/CG configuration. A field indicating the use of resources may be included in activation DCI of the SPS/CG configuration.

To effectively deliver user data for XR services by sharing resources by a plurality of UEs, the amount of resources used by one UE needs to be limited. The following method may be used to restrict transmission of the UE when UEs are allocated the first use radio resource and/or the second use radio resource.

### Method 1.1-1

- When the UE performs PDSCH reception and/or PUSCH transmission in the first use radio resource, the UE does not perform transmission and/or reception in another second use radio resource that exists up to a next first use radio resource.
- Accordingly, only when the UE fails to perform PDSCH reception and/or PUSCH transmission in the first use radio resource, the UE may temporarily perform PDSCH reception and/or PUSCH transmission in the second use radio resource.
- The UE may determine whether PDSCH reception is performed according to whether PDSCH decoding is successful, DM-RS JT-RS detection of PDSCH, energy detection of PDSCH, and the like. Alternatively, the UE may also determine whether PDSCH reception is performed in any manner.
- Alternatively, the UE may determine whether PDSCH reception and/or PUSCH transmission is performed according to whether reception or transmission is performed by a random number of transmissions N. The number of transmissions N may be indicated and/or configured by L1 signaling and/or higher layer signaling.
- According to Method 1.1-1, the availability of the second use radio resource with respect to other UEs that share the second use radio resource by preventing a UE using the first use radio resource from using the second use radio resource.

### Method 1.1-2

- The UE performs PDSCH reception and/or PUSCH transmission in the first use radio resource or the second use radio resource, and does not use the second use radio resource for a certain time.
- Accordingly, the UE may perform PDSCH reception and/or PUSCH transmission in the second use radio resource only when PDSCH reception and/or PUSCH transmission is not performed before the second use radio resource.
- Method 1.1-2 may be usefully used when two or more second use radio resources are configured to reduce an influence of jitter.
- The certain time in which the second use radio resource is not used may be predefined. Alternatively, the certain time in which the second use radio resource is not used may be indicated and/or configured for the UE through L1 signaling and/or higher layer signaling of the BS.
- The certain time in which the second use radio resource is not used may be a time from PDSCH reception and/or PUSCH transmission to a start of the closest first use radio resource.

In the conventional NR system, the UE may not know whether a resource given to the UE is a shared resource or a dedicated resource. Therefore, in the conventional NR system, the UE may not explicitly distinguish the first use radio resource and the second use radio resource.

In this case, to apply the proposed methods, the UE may assume all SPS/CG configurations configured for the UE as the first use radio resource. Alternatively, the UE may assume all the SPS/CG configurations configured for the UE as the second use radio resource. Alternatively, the UE may assume all the SPS/CG configurations configured for the UE as the first use radio resource and the second use radio resource at the same time.

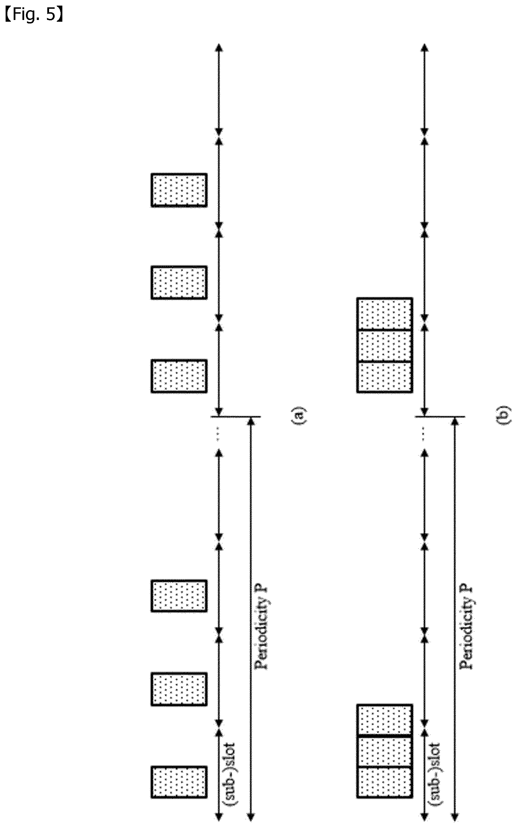

When the BS configures and activates a periodic radio resource (e.g. SPS or Configured grant) to the UE, the BS may allocate a plurality of radio resources within one period to the UE. In the conventional SPS/CG configuration, only one resource is included within one period when repetitive transmission is not configured, and thus allocating a plurality of radio resources that are not repeatedly transmitted within one period corresponds to a change in consideration of data jitter. As shown in FIG. 5(a), the plurality of radio resources may have a form in which the same time/frequency resource allocation in a slot is repeated every certain interval (e.g. 1 slot). As shown in FIG. 5(b), a plurality of radio resources may have a form in which radio resources having the same length are continuously allocated to a symbol consecutive to a first radio resource. Although FIG. 4 shows that three radio resources are included within the period P, the number of radio resources is not limited thereto, and N radio resources may be allocated within the period P. The number N of radio resources may be determined by L1 signaling and/or higher layer signaling. When a plurality of radio resources are configured within a period, a set of a plurality of radio resources within a period may be interpreted as one first use radio resource or second use radio resource.

When the first use radio resource and/or the second use radio resource include a plurality of radio resources within one period of the SPS/CG configuration, the BS and/or the UE may perform transmission using one or some of the plurality of radio resources. This may be to select the earliest radio resource for transmitting a transport block including user data in consideration of a time point of generating the user data of the BS/UE. To increase the reliability of transmission, the BS or the UE may repeatedly transmit a transport block using a plurality of radio resources. In this case, the number K of repeated transmissions may be determined by L1 signaling and/or higher layer signaling.

The BS may configure a radio resource set including a plurality of radio resources configured in one period as one first use radio resource or second use radio resource in the UE. When a period including (i) a first radio resource starting from SFN=0 or (ii) a first radio resource scheduled while activating SPS/CG is referred to as a 0th period, a radio resource in an even-numbered period may be configured as the first use radio resource, and a radio resource in an odd-numbered period may be configured as the second use radio resource. Alternatively, the radio resource in an odd-numbered period may be configured as the first use radio resource and the radio resource in an even-numbered period may be configured as the second use radio resource.

The BS may configure some radio resources among N radio resources configured within one period as the first use radio resource and configure the remaining radio resources for the UE as the second use radio resource. For example, the BS may configure an RRC parameter M indicating the number of first use radio resources to the UE, and may configure an RRC parameter R indicating a ratio of the first use radio resource. The UE for which M and/or R are configured may configure the first M and/or first ceil(N*R) radio resources among N radio resources indicated and/or configured within a period as the first use radio resource, and may configure the remaining radio resources as the second use radio resource.

The BS may configure the SPS/CG configuration for the first use radio resource and the SPS/CG configuration for the second use radio resource to the UE through higher layer signaling. The BS may transmit scheduling information within one period for the first use radio resource and the second use radio resource to the UE. For example, each SPS/CG configuration may include an RRC parameter indicating whether a radio resource configured in the corresponding configuration is the first use radio resource or the second use radio resource. As another example, the first use radio resource and the second use radio resource may be scheduled through an activation message (e.g., activation DCI) for each SPS/CG configuration. The first use radio resource and the second use radio resource may be configured through each RRC parameter set including scheduling information of the first use radio resource and the second use radio resource (e.g., rrc-ConfiguredUplinkGrant in ConfiguredGrantConfig IE).

To effectively use the first use radio resource and the second use radio resource, the UE and/or the BS may have to transmit user data through a specific SPS/CG configuration according to the characteristics (packet size, arrival rate, or the like) and/or requirements (required throughput, reliability, and latency) of the user data. The BS and/or the UE may determine whether to transmit the user data through the first use radio resource or the second use radio resource according to the characteristics and/or requirement of the user data. For example, the UE may have to transmit user data required for an XR service through a specific SPS/CG configuration. If necessary, when a particular SPS/CG configuration is to be used as the second use radio resource, user data with low reliability required through a particular SPS/CG configuration may be transmitted. In other words, the user data having high reliability may be restricted not to be transmitted through a specific SPS/CG configuration.

This operation may be implemented as a MAC layer operation of the UE (e.g. UE operation described in 3GPP TS 38.321 v17.0.0) or a BS operation similar thereto. For example, as disclosed in section 5.4.3.1 of 3GPP TS 38.321, according to the related art, the UE may define each data transmission service on a MAC layer as a logical channel, and the BS may configure restriction of each logical channel to the UE according to the characteristics and requirements of each transmission service. This restriction may include restriction of the maximum length of PUSCH transmission, restriction of CG configuration in which corresponding data is to be transmitted, and restriction of a CG type in which the corresponding data is to be transmitted, such as maxPUSCH-Duration, allowedCG-List, and configuredGrantType1Allowed. Through this, the UE may limit a specific data transmission service to be transmitted only through a specific CG, and the BS may also limit a specific data transmission service to be transmitted only through the specific SPS using a similar method.

Through the proposed methods, the BS may explicitly indicate a resource that is not shared by UEs and a resource that is shared by the UEs while configuring a plurality of radio resources for the plurality of UEs. The UE may use each resource according to the purpose through explicit resource division. When a large latency time due to data jitter occurs in the UE by using a shared resource only when absolutely necessary, a transmission success rate in the shared resource may be increased. The BS may adjust the operation of the UE through explicit indication of the resource use.

The contents of the present disclosure are not limited only to the transmission and reception of uplink and/or downlink signals. For example, the present disclosure may be used in direct communication between UEs. The BS according to the present disclosure may be a concept including a relay node as well as a BS. For example, an operation of the BS according to the present disclosure may be performed by a BS, but may be performed by a relay node.

It is evident that examples of the proposed method described above may also be included in one of the implementation methods of the present disclosure and thus are to be considered as a sort of proposed methods. The proposed methods may be implemented independently, but may be implemented in the form of a combination (or merge) of some proposed methods. A rule may be defined such that the BS notifies the UE or a transmission UE notifies a reception UE through a predefined signal (e.g. physical layer signal or higher layer signal).

### Implementation

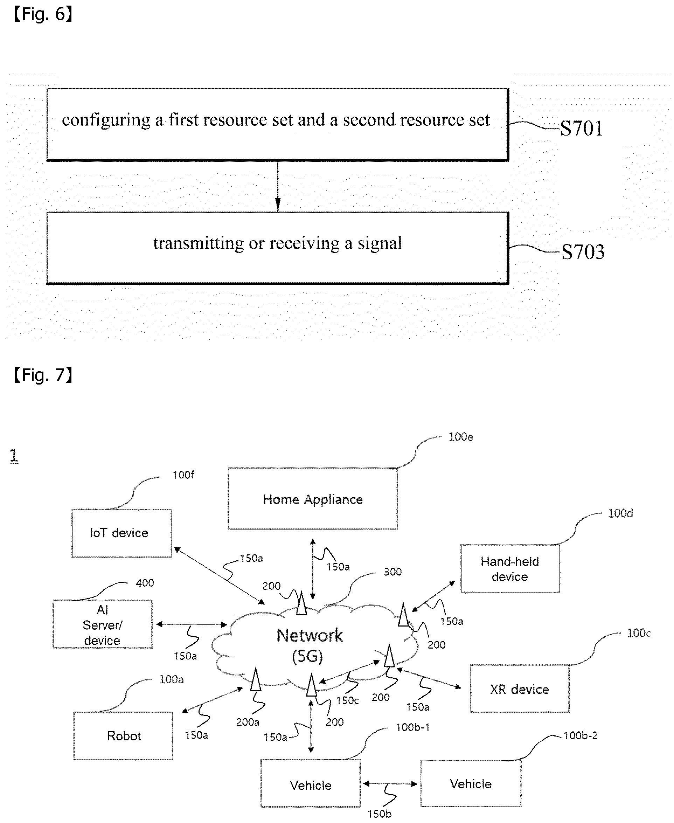

FIG. 6 is a flowchart illustrating a method of transmitting and receiving a signal according to an embodiment of the present disclosure.

Referring to FIG. 6, the method according to an embodiment of the present disclosure may include configuring a first radio resource set and a second radio resource set (S701) and transmitting or receiving a signal (S703).

An operation of FIG. 6 may be performed by a UE and/or a BS.

In addition to the operation of FIG. 6, one or more of the operations described above may be further performed.

A first radio resource set corresponds to a set of first use radio resources described in Section 1. Accordingly, the first radio resource set corresponds to a dedicated resource configured for a particular UE. A second radio resource set corresponds to a set of second radio resources. Thus, the second radio resource set corresponds to a common resource to be used by a plurality of UEs within one serving cell.

The first use radio resource may also be referred to as a first resource. Referring to Section 1, a plurality of first resources may be configured within one period. The second use radio resource may also be referred to as a second resource. A plurality of second resources may also be configured within one period.

The first radio resource set and the second radio resource set may be semi-statically configured via the SPS/CG configuration. The first radio resource set and the second radio resource set may be dynamically configured through DCI.

Commonly in Methods 1.1-1 and 1.1-2 of Section 1.1, when the UE transmits and/or receives a signal through the first use radio resource within a certain period, the signal is not transmitted/received through the second use radio resource until a certain period ends.

Therefore, based on transmission or reception of a signal being performed through one of the first resources within a period, the second resources within the period are not used for transmission or reception of the signal. Based on transmission or reception of the signal not being performed through the first resources within the period, one of the second resources in the period is used to transmit or receive the signal.

Referring to Method 1.1-1, one period may be an interval between the first use radio resources. Referring to Method 1.1-2, one period may be a value configured based on L1 signaling and/or higher layer signaling of the BS. Referring to Method 1.1-2, one period may be a time interval to the first use radio resource after transmission and/or reception of a signal. Referring to FIG. 4 and the related description, one period may be a value of a periodicity parameter included in an SPS/CG configuration. When the first use radio resource and the second use radio resource are configured by dividing the even number/odd number of the period according to the SPS/CG configuration, a value of twice the periodic parameter value becomes one period.

A signal transmitted and received between the UE and the BS may be a PDSCH or a PUSCH. For example, the signal may be a PDSCH when the first radio resource set and the second radio resource set are configured based on the SPS/CG configuration(s). The signal may be a PUSCH when the first radio resource set and the second radio resource set are configured based on the CG configuration(s).

As described with reference to FIG. 4, the first use radio resource and the second use radio resource may be configured based on different SPS/CG configurations. Accordingly, the first radio resource set may be configured based on the first SPS configuration or the first CG configuration having a first index. The second radio resource set may be configured based on the second SPS configuration or the second CG configuration having a second index.

When the first use radio resource and the second use radio resource are configured based on different SPS/CG configurations, whether each radio resource is a dedicated resource or a common resource may be configured by an RRC specification parameter and/or activation DCI in each SPS/CG configuration. Accordingly, the first radio resource set may be configured as a dedicated resource based on a fist RRC parameter in a first SPS configuration or a first CG configuration, and the second radio resource set may be configured as a common resource based on a second RRC parameter in a second SPS configuration or a second CG configuration. The first radio resource set may be configured as a dedicated resource by first activation DCI for a first SPS configuration or a first CG configuration, and the second radio resource set may be configured as a common resource by second activation DCI for a second SPS configuration or a second CG configuration. The first SPS/CG configuration and the second SPS/CG configuration may be configured with the same period such that the first radio resource set and the second radio resource set are configured within a common period. As a specific example, a first period parameter value in the first SPS/CG configuration and a second period parameter value in the second SPS/CG configuration may be the same.

Referring to Section 1, in the conventional NR system, the BS may not explicitly indicate the first use radio resource and the second use radio resource. The UE may not explicitly distinguish the first use radio resource and the second use radio resource. When the use of the radio resource is not explicitly indicated through L1 signaling and/or higher layer signaling, the UE may identify the first use radio resource and the second use radio resource through the UE assumption. Therefore, the UE may configure the first radio resource set as a dedicated resource and the second radio resource set as a common resource through the UE assumption.

As described with reference to FIG. 5, the first use radio resource and the second use radio resource may also be configured based on one SPS/CG configuration. Accordingly, the first radio resource set and the second radio resource set may be configured based on one SPS/CG configuration or one CG configuration having one index.

When the first use radio resource and the second use radio resource are configured based on different SPS/CG configurations, the first use radio resource and the second use radio resource may be distinguished in units of SPS/CG configurations. However, when the first use radio resource and the second use radio resource are configured based on one SPS/CG configuration, the first use radio resource and the second use radio resource among the resources configured by one SPS/CG configuration need to be distinguished, and thus the first use radio resource and the second use radio resource may not be distinguished in units of SPS/CG configurations. To distinguish the resources configured by one SPS/CG configuration into the first use radio resource and the second use radio resource, the BS may inform the UE of the number and/or ratio of the first use radio resource. The number and/or ratio of radio resources may be delivered by RRC parameters in the SPS/CG configuration. The number of radio resources corresponds to M described in Section 1.1, and the ratio of radio resources corresponds to R described in Section 1.1.

The present embodiment is to prevent jitter of XR data, data included in the signal may be data related to XR. The UE and/or the BS may identify a type of data based on the characteristics and/or requirements of the data. The UE may also identify a type of data based on a logical channel configuration. The UE may transmit only data reaching a physical layer through a specific logical channel through the first radio resource set and the second radio resource set. Data reaching the physical layer through a logical channel other than the specific logical channel may be transmitted through a radio resource other than the first radio resource set and the second radio wireless resource set.

In addition to the operations described with respect to FIG. 6, one or more of the operations described with reference to FIGS. 1 to 5 and/or the operations described in Section 1 may be combined and additionally performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

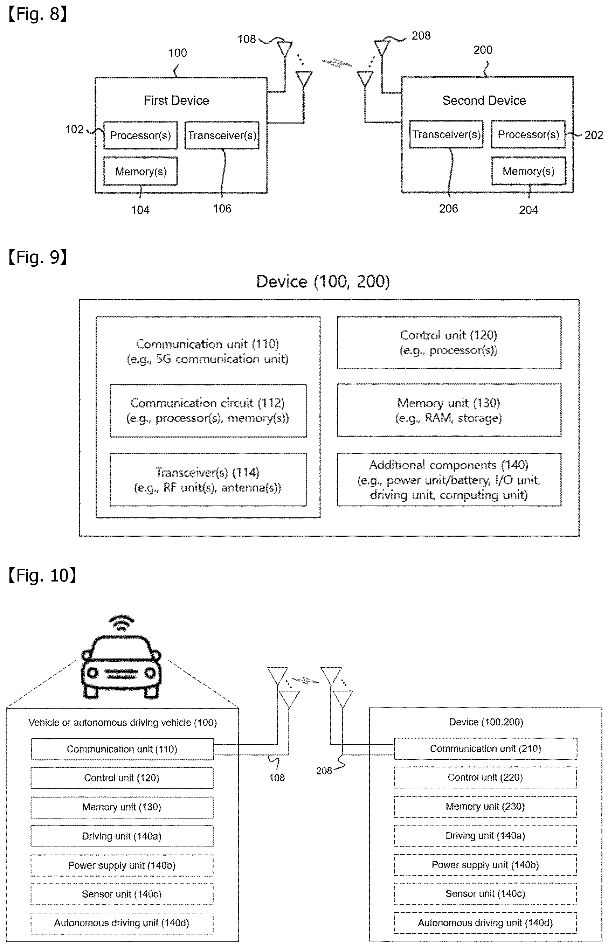

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 7), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving a signal by a user equipment (UE) in a wireless communication system, the method comprising:
configuring a first radio resource set and a second radio resource set, the first radio resource set including one or more first resource within one period, and the second radio resource set including one or more second resources within the one period; and
transmitting or receiving the signal, the signal being transmitted or received through one of the first resources or one of the second resources,
wherein, based on transmission or reception of the signal being performed through one of the first resource within the period, the second resource within the period is not used in transmission or reception of the signal,
based on that performing of transmission or reception of the signal through the first resources within the period is skipped, one of the second resources within the period is used in transmission or reception of the signal, and
the first radio resource set is a dedicated resource for the UE, and the second radio resource set is a common resource for a serving cell of the UE.

2. The method of claim 1, wherein the signal is a physical downlink shared channel (PDSCH) or a physical uplink shared channel (PUSCH).

3. The method of claim 1, wherein the first radio resource set is configured based on a first semi-persistent scheduling (SPS) configuration or first configured grant (CG) configuration having a first index, and
the second radio resource set is configured based on a second SPS configuration or second CG configuration having a second index.

4. The method of claim 3, wherein the first radio resource set is configured as the dedicated resource based on a first radio resource control (RRC) parameter in the first SPS configuration or the first CG configuration, and
the second radio resource set is configured as the common resource based on a second RRC parameter in the SPS configuration or the second CG configuration.

5. The method of claim 3, wherein the first radio resource set is configured as the dedicated resource by first activation downlink control information (DCI) for the first SPS configuration or the first CG configuration, and
the second radio resource set is configured as the common resource by second activation DCI for the second SPS configuration or the second CG configuration.

6. The method of claim 3, wherein the one period is equally configured for (i) the first SPS configuration or the first CG configuration and (ii) the second SPS configuration or the second CG configuration.

7. The method of claim 1, wherein the first radio resource set is configured as the dedicated resource by UE assumption, and
the second radio resource set is configured as the common resource by UE assumption.

8. The method of claim 1, wherein the first radio resource set and the second radio resource set are configured based on one semi-persistent scheduling (SPS) configuration or one configured grant (CG) configuration having one index.

9. The method of claim 8, wherein the one SPS configuration or the one CG configuration includes a radio resource control (RRC) parameter for a number and/or ratio between the first resources and the second resources.

10. The method of claim 1, wherein data included in the signal is determined based on a logical channel configuration.

11. A user equipment (UE) for transmitting and receiving a signal in a wireless communication system, the UE comprising:
at least one transceiver;
at least one processor; and
at least one memory operatively connected to the at least one processor and configured to store instructions that when executed causes the at least one processor to perform a specific operation including:
configuring a first radio resource set and a second radio resource set, the first radio resource set including one or more first resource within one period, and the second radio resource set including one or more second resources within the one period; and
transmitting or receiving the signal, the signal being transmitted or received through one of the first resources or one of the second resources,
wherein, based on transmission or reception of the signal being performed through one of the first resource within the period, the second resource within the period is not used in transmission or reception of the signal,
based on that performing of transmission or reception of the signal through the first resources within the period is skipped, one of the second resources within the period is used in transmission or reception of the signal, and
the first radio resource set is a dedicated resource for the UE, and the second radio resource set is a common resource for a serving cell of the UE.

12. An apparatus for a user equipment (UE), the apparatus comprising:
at least one processor; and
at least one memory operatively connected to the at least one processor and configured to store instructions that when executed causes the at least one processor to perform an operation including:
configuring a first radio resource set and a second radio resource set, the first radio resource set including one or more first resource within one period, and the second radio resource set including one or more second resources within the one period; and
transmitting or receiving the signal, the signal being transmitted or received through one of the first resources or one of the second resources,
wherein, based on transmission or reception of the signal being performed through one of the first resource within the period, the second resource within the period is not used in transmission or reception of the signal,
based on that performing of transmission or reception of the signal through the first resources within the period is skipped, one of the second resources within the period is used in transmission or reception of the signal, and
the first radio resource set is a dedicated resource for the UE, and the second radio resource set is a common resource for a serving cell of the UE.

13. A non-volatile computer-readable storage medium including at least one computer program to cause at least one processor to perform an operation comprising:
configuring a first radio resource set and a second radio resource set, the first radio resource set including one or more first resource within one period, and the second radio resource set including one or more second resources within the one period; and
transmitting or receiving the signal, the signal being transmitted or received through one of the first resources or one of the second resources,
wherein, based on transmission or reception of the signal being performed through one of the first resource within the period, the second resource within the period is not used in transmission or reception of the signal,
based on that performing of transmission or reception of the signal through the first resources within the period is skipped, one of the second resources within the period is used in transmission or reception of the signal, and
the first radio resource set is a dedicated resource for the UE, and the second radio resource set is a common resource for a serving cell of the UE.

14. A method of transmitting and receiving a signal by a base station (BS) in a wireless communication system, the method comprising:
configuring a first radio resource set and a second radio resource set, the first radio resource set including one or more first resource within one period, and the second radio resource set including one or more second resources within the one period; and
transmitting or receiving the signal, the signal being transmitted or received through one of the first resources or one of the second resources,
wherein, based on transmission or reception of the signal being performed through one of the first resource within the period, the second resource within the period is not used in transmission or reception of the signal,
based on that performing of transmission or reception of the signal through the first resources within the period is skipped, one of the second resources within the period is used in transmission or reception of the signal, and
the first radio resource set is a dedicated resource for a specific user equipment (UE), and the second radio resource set is a common resource for a serving cell within the BS.

15. A base station (BS) for transmitting and receiving a signal in a wireless communication system, the BS comprising:
at least one transceiver;
at least one processor; and
at least one memory operatively connected to the at least one processor and configured to store instructions that when executed causes the at least one processor to perform a specific operation including:
configuring a first radio resource set and a second radio resource set, the first radio resource set including one or more first resource within one period, and the second radio resource set including one or more second resources within the one period; and
transmitting or receiving the signal, the signal being transmitted or received through one of the first resources or one of the second resources,
wherein, based on transmission or reception of the signal being performed through one of the first resource within the period, the second resource within the period is not used in transmission or reception of the signal,
based on that performing of transmission or reception of the signal through the first resources within the period is skipped, one of the second resources within the period is used in transmission or reception of the signal, and
the first radio resource set is a dedicated resource for a specific user equipment (UE), and the second radio resource set is a common resource for a serving cell within the BS.
